# EUROPEAN PATENT APPLICATION

(11) **EP 2 224 405 A1**
(43) Date of publication of application: **01.09.2010**
(21) Application number: 09153607.8
(22) Date of filing: 25.02.2009
(51) Int. Cl.: G07F 7/10, G06K 19/07

(54) **Method to control a multi-purpose card and respective multi-purpose card**

(71) Applicant: NXP B.V., 5656 AG Eindhoven (NL)
(72) Inventor: Thueringer, Peter, 8101 Gratkorn - Vienna (AT); Neffe, Ulrich, 8101 Gratkorn - Vienna (AT); Meyn, Hauke, 21147 Hamburg (DE)
(74) Representative: Krott, Michel

(57) **Abstract**

In a method to control a multi-purpose card (1) comprising an integrated circuit (2), memory means (3) and selection means (4) to select different features an information representing the last selected feature is stored within a short time non volatile memory (5) in order to present a remote reading device different features of the multi-purpose card (1). Further a respective multi-purpose card (1) is designed.

## Description

### FIELD OF THE INVENTION

The invention relates to a method to control a multi-purpose card comprising an integrated circuit, memory means and selection means to select different features and a respective multi-purpose card.

### BACKGROUND OF THE INVENTION

In the future for example mobile phones and other personal devices like handheld computers or the like will be used for several purposes for example to make a phone call and to execute in parallel or afterwards a financial trans action.

For this so called multi-purpose cards are known in the state of the art. For example the US 2006/0131396 Al discloses a selectable, multi-purpose card comprising a plurality of features stored in memory means. A user may select a feature and the multi-purpose card is designed to communicate with a card reader to execute the feature. For example each feature is embodied in a respective magnetic strip.

Further the US 2008/0021824 Al describes a payment device including an integrated circuit to store at least two account numbers.

Finally the US 2007/0138299 Al discloses a transaction card comprising a memory which can store a plurality of transaction profiles. With an user interface one of the plurality of transaction profiles can be selected by the user to communicate with for example a remote card reader.

These multi-purpose cards have got the disadvantage that according to standard communication protocols for a communication between such multi-purpose or smart cards and remote card reading devices it is not possible to store any information which specific feature has been selected by the user during the last use of the card. For example during a power-up-phase no such information is available.

### OBJECT AND SUMMARY OF THE INVENTION

It is an object of the present invention to provide a method to control a multi-purpose card such that the status of the card or the respective integrated circuit can be stored to keep the last information which has been presented for example to a reading device. Further a respective multi-purpose card shall be specified.

According to the invention there is an additional short time non volatile memory which can store an information representing the last selected feature. Such a computer memory can retain the stored information even when it is not powered. These are for example read-only memories, flash memories and the most types of magnetic computer storage devices. Also electrically addressed non volatile memories shall be comprised within the scope of the invention. It is to understand that the multi-purpose card after being read by a remote reading device and having remembered its last presented feature might change itself from one specific feature to another in order to present this new feature to the remote reading device.

Preferably the short time non volatile memory holds the information for at least some milliseconds preferably about ten milliseconds. This relates to a typical radio frequency reset sequence by which the standard communication protocols to be described in the following are operated. That means that the information is stored for at least that period of time that needs a remote reading device to do a reset and to check for new cards, integrated circuits or the like to be presented within its field of reception.

In a preferred embodiment this short time non volatile memory is designed as a flipflop or a latch. Such a flipflop has a specific capacitor at is supply and it is even not discharged when the supply of the remainder of the integrated circuit will drop which happens when the electro magnetic field of a remote card reading device is resetted. The flipflop is only discharged by intrinsic leakage in a time that can be chosen by a person skilled in the art in respect of the used capacitor or impedances or resistors. Especially this leakage time, which may change with temperature, should be longer than a field reset time used in reading devices to check for new cards to be presented in an electromagnetic field.

The advantage of the invention lies in the fact that common contactless communication protocols can be used with such a multi-purpose card comprising an additional short time non volatile memory. This comes from the fact that the multi-purpose card stores the last presented feature and the experience to the system is the same as if a user would exchange very fast that means with the reset frequency different cards and would present these different cards one after the other to the reading device until he has found the right one with the certain application or feature he wants to execute. For example a contactless communication protocol as defined in the standard ISO/IEC14443 can be used.

Finally it is proposed that such a multi-purpose card is part of a mobile phone for example a SIM-card and it is designed to fulfill further functions like money transactions when it is presented within a field of a cash machine. Also it could work as an ID-card for an access control system.

### BRIEF DESCRIPTION OF THE DRAWING

The invention will be described in greater detail hereinafter, by way of a nonlimiting example, with reference to the embodiment shown in the drawing.

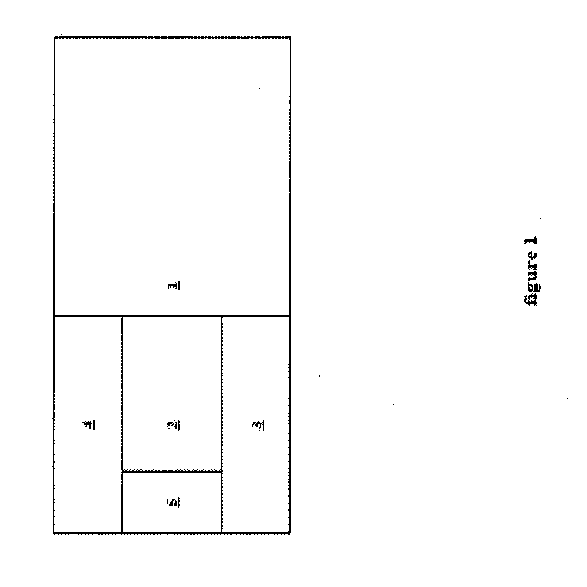

Fig. 1 is a multi-purpose card.

### DESCRIPTION OF THE EMBODIMENT

Fig. 1 shows a multi-purpose card 1 comprising an integrated circuit 2, memory means 3 and selection means 4 to select different features.

In the memory means 3 can be stored different identification codes for example to execute money transactions and/or to allow an access at an access control system. It is to understand that the multi-purpose card 1 is designed to communicate with a remote reading device, which is not displayed. Such a communication is executed via electromagnetic waves for example according to the ISO/IEC14443-standard.

Further the multi-purpose card 1 or the integrated circuit 2 is provided with an additional short time non volatile memory 5 for example a flipflop or the like. This short time non volatile memory 5 is able to store information representing the last selected feature of the multi-purpose card 1 at least for such a period of time which is equivalent to the reset frequency of the remote reading device.

According to this the information is not lost during a field reset and the multi-purpose card 1 can act as if after each field reset another common single featured smart card would be newly presented to the remote reading device until the function or feature corresponding to this certain reading device is found. That means that a reading device searches itself for the fitting feature of the multi-purpose card 1.

### LIST OF REFERENCE SIGNS

- 1.: multi-purpose card
- 2.: integrated circuit
- 3.: memory means
- 4.: selection means
- 5.: short time non volatile memory

## Claims

1. A method to control a multi-purpose card (1) comprising an integrated circuit (2), memory means (3) and selection means (4) to select different features,
**characterized in that**
within a short time non volatile memory (5) an information representing the last selected feature is stored.

2. The method according to claim 1, **characterized in that** the information is stored for at least some milliseconds.

3. The method according to claim 1 or 2, **characterized in that** contactless communication protocols are used for a communication with a remote reading device.

4. A multi-purpose card (1) comprising an integrated circuit (2), memory means (3) and selection means (4) to select different features,
**is characterized by**
a short time non volatile memory (5) for storing an information representing the last selected feature.

5. The multi-purpose card (1) according to claim 4 **characterized in that** the short time non volatile memory (5) is a flipflop.

6. The multi-purpose card (1) according to claim 4 or 5 **characterized in that** the features are those of a mobile phone and/or a money transactions and/or an access control system.
